# EUROPEAN PATENT APPLICATION

(11) **EP 2 243 946 A2**
(43) Date of publication of application: **27.10.2010**
(21) Application number: 10250765.4
(22) Date of filing: 13.04.2010
(51) Int. Cl.: F02K 1/76

(54) **Actuators system**

(30) Priority: 15.04.2009 GB 0906392
(71) Applicant: Goodrich Actuation Systems Ltd., Solihull B90 4LA (GB)
(72) Inventor: Davies, Stephen Harlow, Shrewsbury SY4 4SF (GB)
(74) Representative: Bailey, Richard Alan

(57) **Abstract**

An actuator system comprises an electric motor (10), a plurality of linearly extendable actuators (12, 14, 16), and a drive transmission arrangement (26) transmitting rotary drive from the motor (10) to the actuators (12, 14, 16), wherein the drive transmission arrangement (26) includes a drive shaft (36) and a gear arrangement (30, 38, 40), and wherein at least one of the drive shaft (36) and the gear arrangement (30, 38, 40) is dry-running.

## Description

This invention relates to an actuator system for use in aerospace applications, and in particular to an electrically powered thrust reverser actuator system.

A typical thrust reverser system includes a number of movable components which are each arranged to be driven, in use, between a stowed position and a deployed position. Many systems are known in which hydraulic actuators are used to drive the movable components between these positions. Such systems are typically heavy. The need to route pipework from the associated hydraulic pumps to the actuators results in the systems being of relatively complex form, and adds extra weight to the system.

It is desired to use electrically powered actuators to drive the movable thrust reverser components, and US 5960626 describes a scheme of this type. Such a scheme makes use of a series of linear screw actuators, each of which has a motor associated therewith. As a thrust reverser system associated with an engine will usually include several, for example four or six, actuators, it will be appreciated that the weight of the actuators and their associated motors is significant.

It is known to use a single motor to drive several actuators. For example US 4522358 describes an arrangement in which a single hydraulic motor is used to drive several actuators, flexible drive shafts and gearboxes being used in the transmission of power to the actuators.

The primary use of a thrust reverser system is in deceleration of an aircraft on landing, thus the actuators will typically have spent a significant period of time in a low temperature environment, for example at temperatures below -50°C, shortly before use. At such temperatures, the lubricants used in bearings, gearboxes or the like typically become highly viscous and as a result the motor used to drive each actuator has to be capable of overcoming the drag loadings resulting from the increased viscosity of the lubricants. Where hydraulically powered linear actuators are used, sufficient excess power is usually present that overcoming the drag loadings can be readily achieved. However, where an electric motor is used, a motor of increased power may be required. Higher power motors are typically of increased size and weight, resulting in consequent increases in the associated structures and, additionally, the components driven by the higher power capability need to be larger and heavier in order to resist damage from the potentially greater loads. This is undesirable.

The effect of increased lubricant drag is particularly critical where the drag is applied at or upstream of a gearbox in which the relatively high speed, low torque output of the motor is converted to a lower rotary speed, higher torque input to the actuator.

In addition to causing drag, especially at low temperatures, extra maintenance operations due to the presence of the lubricants, for example checking and re-greasing the gearbox and associated shafts, have to be undertaken. Further, the presence of the lubricants adds additional weight to the system.

It is an object of the invention to provide an actuator system, and in particular a thrust reverser actuator system, in which at least some of the disadvantages set out hereinbefore are overcome or are of reduced effect.

According to the present invention there is provided an actuator system comprising an electric motor, a plurality of linearly extendable actuators, and a drive transmission arrangement transmitting rotary drive from the motor to the actuators, wherein the drive transmission arrangement includes a drive shaft and a gear arrangement, and wherein at least one of the drive shaft and the gear arrangement is dry-running.

The actuator system is preferably a thrust reverser actuator system in which the linearly extendable actuators are operable to drive part of a thrust reverser system for movement.

Where the drive shaft is dry-running then the gear arrangement may be lightly lubricated. Alternatively, the entire drive transmission arrangement may be a dry-running drive transmission arrangement.

By providing a dry-running, or substantially dry-running, drive transmission arrangement, that is to say a drive transmission arrangement in which little or no fluid lubricant is used, or avoiding the use of fluid lubricants in at least one of the drive shaft and the gear arrangement of the drive transmission arrangement, it will be appreciated that the low temperature viscosity issues mentioned hereinbefore are reduced or overcome, maintenance operations are reduced or eliminated, and the weight of the lubricant is saved.

Preferably dry running flexible drive shafts are used to transmit drive to at least one of the actuators.

Each actuator conveniently has a dry-running gear arrangement associated therewith forming part of the drive transmission arrangement. The dry-running gear arrangements each preferably comprise a pinion gear and a face gear in meshing engagement with one another.

The motor is preferably a dry-running motor with sealed-for-life bearings.

The motor output is preferably connected directly to the gear arrangement of a first one of the actuators, although this need not always be the case and arrangements in which the motor output is connected to the gear arrangement by, for example, a flexible drive shaft are also possible. As a result, the provision of a motor output gearbox within the motor housing can be avoided, reducing weight and avoiding the need for additional lubrication. The gear arrangement of the first one of the actuators is preferably further operable to drive an output whereby rotary drive can be transmitted to at least a second one of actuators. The output is preferably double ended.

The second actuator preferably has a position sensor associated therewith for monitoring the position of the actuators.

The position sensor is preferably an LVDT driven by a plastics material gearing arrangement. The use of such a plastics material gearing arrangement is advantageous in that it is of relatively low weight. Alternatively, the position sensor may be an RVDT sensor driven by a reduction gearbox.

The invention will further be described, by way of example, with reference to the accompanying drawings, in which:
Figure 1 is a schematic view illustrating a thrust reverser actuator system in accordance with an embodiment of the invention; and
Figures 2 and 3 are views illustrating the gear arrangements of two of the actuators of the system shown in Figure 1.

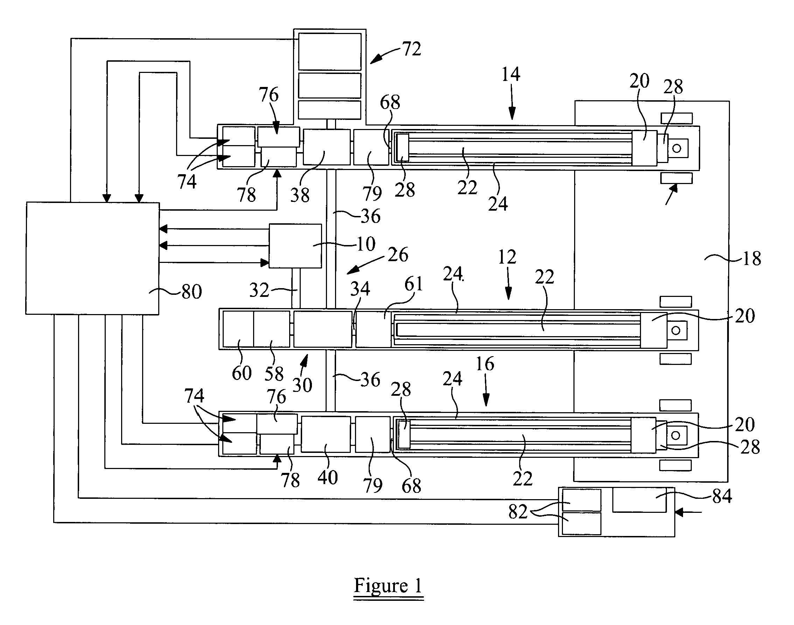

The thrust reverser actuator system illustrated in Figure 1 comprises an electrically powered motor 10 arranged to drive three linearly extendible actuators 12, 14, 16 to control the extension thereof and thereby control the position occupied by a thrust reverser cowl 18. Each actuator 12, 14, 16 comprises a rotatable nut component 20 which is in threaded engagement with an output shaft 22, the nature of the threaded engagement between the nut component 20 at the shaft 22 being of a low friction form, for example comprising a roller or ball-screw coupling. The shafts 22 are mounted to the thrust reverser cowl 18, the nature of the mountings being such that the shafts 22 are held against rotation. It will be appreciated that in such an arrangement rotation of each nut component 20 causes the associated shaft 22 to translate, thereby driving the thrust reverser cowl 18 between its stowed and deployed positions.

Each nut 20 is secured to rotatable drive tube 24 arranged to be driven for rotation by the motor 10 through a drive transmission arrangement 26. Stops 28 are mounted upon the ends of the shafts 22 of the second and third actuators 14, 16, and it will be appreciated that co-operation between the stops 28 and the nuts 20 when the actuators 14, 16 are in their extended and retracted conditions serves to limit movement of the cowl 18.

The drive transmission arrangement 26 comprises a first gear arrangement 30 arranged to be driven for rotation by the motor 10. The first gear arrangement 30 includes a drive output 34 operable to drive the nut 20 of the first actuator 12 for rotation. The first gear arrangement 30 is further arranged to drive a pair of flexible drive shafts 36 for rotation. The flexible drive shafts 36 are operable to drive second and third gear arrangements 38, 40 associated with the second and third actuators 14, 16 for rotation. All three gear arrangements 30, 38, 40 and the drive shafts 36 form part of the drive transmission arrangement 26.

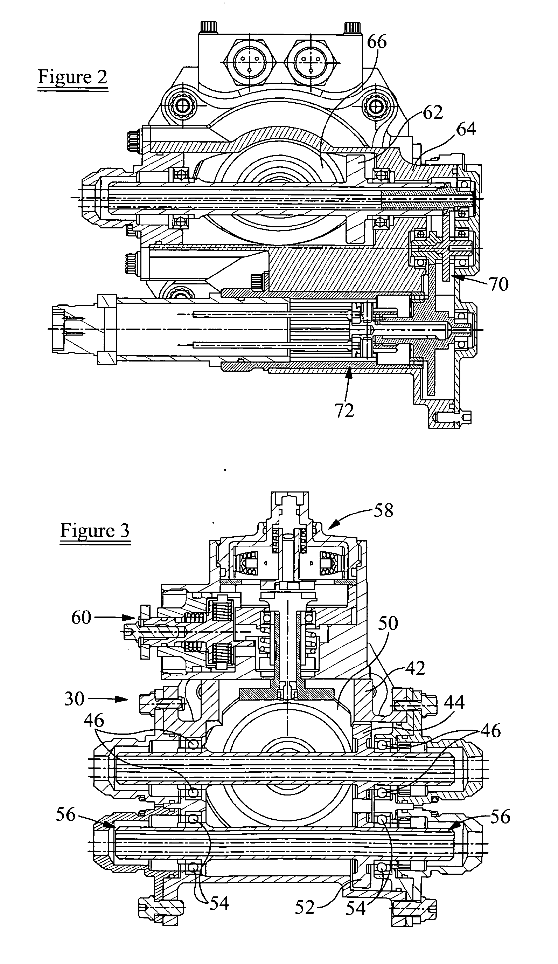

The first gear arrangement 30 is illustrated in more detail in Figure 3 and comprises a housing 42 within which a pinion gear 44 is supported for rotation through bearings 46. The pinion gear 44 is coupled directly to an output shaft 32 of the motor 10 as shown in Figure 1. Although the pinion gear 44 is illustrated as being accessible from both sides of the housing 42 in use the access opening remote from the shaft 32 will be closed, the provision of two access openings permitting the actuator to have the motor located on either side thereof.

The pinion gear 44 includes a series of teeth arranged to mesh with the teeth of a face gear 50 which, in turn, referring back to Figure 1, is connected to the shaft 34 and so is operatively connected to the nut 20. It will be appreciated, therefore, that rotation of the pinion gear 44 by the motor 10 drives the face gear 50 and shaft 34 for rotation, thereby driving the shaft 22 for axial movement.

The pinion gear 44 in addition to serving to drive the face gear 50 and nut 20 for rotation, also meshingly engages an output gear 52 supported by bearings 54 within the housing 42. The output gear 52 is of double-ended form, each end 56 of the gear 52 being arranged to be coupled to a respective one of the flexible drive shafts 36.

The gear arrangement 30 further comprises a manual drive arrangement 58 whereby the face gear 50 can be driven for rotation independently of the motor 10, and a lock arrangement 60 whereby the face gear 50, and hence actuator 12 can be locked against movement with the actuator 12 in substantially any position. A no-back device 61 (see Figure 1) is provided to apply a braking load resisting movement of the actuator as a result of the application of external loads to the cowl 18.

The second gear arrangement 38 is illustrated in greater detail in Figure 2 and, like the first gear arrangement 30, comprises a pinion gear 62 supported for rotation within a housing 64 and arranged to be driven for rotation by the drive shaft 36 (see Figure 1). The pinion gear 62 meshes with a face gear 66 coupled to a drive shaft 68 rotatable to drive the nut 20 of the second actuator 14 for rotation.

It will be appreciated that in use operation of the motor 10 not only serves to drive the actuator 12, but also drives the flexible drive shaft 36 for rotation by virtue of the operation of the first gear arrangement 30, and the second gear arrangement 38 which is driven by the drive shaft 36 drives the second actuator 14 for movement.

In addition to driving the second actuator 14 for movement, the second gear arrangement 38 further drives a gear train 70 which in turn drives an LVDT 72 to provide an indication of the position occupied by the second actuator 14. The gear train 70 is made up of gears of a plastics material. The use of plastics materials is advantageous in that they are of low weight. In prior arrangements, the use of such plastics materials would not have been possible as the plastics components would have been attacked by the lubricant materials, for example Skydrol ®, used in the gear arrangement. The gear train 70 is very lightly loaded thus the risk of damage to the gears making up the gear train 70, in use, is low. Rather than use an LVDT 72, an RVDT sensor driven by a reduction gear arrangement may be used.

Although not illustrated in Figure 2, the second gear arrangement 38 and/or second actuator 14 will have proximity switches 74, a manual release 76 and a primary lock arrangement 78 associated therewith for use in controlling operation of the thrust reverser system. Further, like the actuator 12, a no-back device 79 is provided.

The third gear arrangement 40 is of very similar form to the second gear arrangement 38, but omits the gear train 70 and LVDT 72.

The motor 10 is controlled by a control unit 80 which, as illustrated, receives position and locks status information from the sensors 74, LVDT 72 and sensors 82 associated with the track along which the cowl 18 is guided for movement. The control unit 80 further controls operation of the primary locks 78 and a lock 84 associated with the track. When it is desired to deploy the thrust reverser, the control unit 80 instructs the locks to release, and release of the locks is sensed by the sensors 74, 82. Once the control unit 80 is satisfied that the locks have been released, the motor 10 is driven for rotation. The operation of the motor 10 results in the output shaft 32 thereof rotating, driving the first gear arrangement 30 for rotation. The first gear arrangement 30 serves to drive the first actuator 12 for extension and also drives the flexible drive shafts 36 for rotation. The flexible drive shafts 36 drive the second and third gear arrangements 38, 40 for rotation which, in turn drives the second and third actuators 14, 16. It will thus be appreciated that the operation of the motor 10 drives the three actuators 12, 14, 16 which in turn drives the thrust reverser cowl 18. Return movement of the cowl 18 is achieved by rotation of the motor 10 in the reverse direction.

In accordance with the invention, the first, second and third gear arrangements 30, 38, 40 are all dry running gear arrangements. As such, the housings 42, 64 within which the pinion gears 44, 62 and face gears 50, 66 are supported for rotation are free of lubricant. By avoiding the provision of lubricant in the housings 42, 64, it will be appreciated that the drag effects resulting from the lubricant becoming of increased viscosity at low temperatures are also avoided. Further, maintenance requirements are reduced, and the weight of the lubricant is saved.

Not only are the first, second and third gear arrangements 30, 38, 40 of dry running form, but also the flexible drive shafts 36 are of dry running form. The flexible drive shafts 36 conveniently take the form of flexible drive shafts located within PTFE liners which support the drive shafts 36 for rotation without requiring the provision of fluid lubricants. As with the gear arrangements, the provision of dry running flexible drive shafts 36 is advantageous in that the low temperature viscosity drag effects are avoided and the weight of the lubricant is saved.

It will be apparent from the description hereinbefore that the entire drive arrangement whereby drive is transmitted from the motor 10 to the three actuators 12, 14, 16 is a dry running drive arrangement in the sense that no fluid lubricant is provided.

Further savings are achieved by avoiding the provision of a gearbox between the output of the motor 10 and the first gear arrangement 30, instead having the drive output 32 of the motor 10 connected directly to the first gear arrangement 30. As a result, not only is the weight of such a gearbox saved but also the provision of lubricant therein and the low temperature viscosity drag effects of such lubricant is avoided.

In addition to the weight savings achievable by avoiding the use of lubricants and the low temperature viscosity issues mentioned hereinbefore being overcome, the avoidance of the use of lubricants in the drive arrangement 26 further reduces maintenance and servicing operations in that servicing procedures to check that the correct levels of lubricant are present can be omitted and re-greasing operations are no longer required.

As well as providing a dry running drive arrangement, the motor 10 is conveniently of dry running form using sealed-for-life bearings. As a consequence, servicing and maintenance of the motor is also reduced.

Although in the arrangement described hereinbefore the drive shafts and the gear arrangements of the drive transmission arrangement are dry-running with the result that the drive transmission arrangement as a whole is a dry-running drive transmission arrangement, one or other of the drive shaft(s) and the gear arrangement may be lubricated, preferably only lightly, whilst still achieving at least some of the benefits of the invention.

The description hereinbefore relates primarily to the use of the invention in connection with a thrust reverser system. It will be appreciated, however, that the actuator system of the invention may be used in other applications, for example in the actuation or movement of flight control surfaces.

It will be appreciated that a wide range of modifications and alterations may be made to the arrangement described hereinbefore without departing from the scope of the invention.

## Claims

1. An actuator system comprising an electric motor (10), a plurality of linearly extendable actuators (12, 14, 16), and a drive transmission arrangement (26) transmitting rotary drive from the motor (10) to the actuators (12, 14, 16), wherein the drive transmission arrangement (26) includes a drive shaft (36) and a gear arrangement (30, 38, 40), and wherein at least one of the drive shaft (36) and the gear arrangement (30, 38, 40) is dry-running.

2. A system according to Claim 1, wherein the system is a thrust reverser actuator system.

3. A system according to Claim 1 or Claim 2, wherein the drive shaft (36) is dry-running and the gear arrangement (30, 38, 40) is lightly lubricated.

4. A system according to Claim 1 or Claim 2, wherein the entire drive transmission arrangement (26) is a dry-running drive transmission arrangement.

5. A system according to any of the preceding claims, wherein at least one dry running flexible drive shaft (36) is used to transmit drive to at least one of the actuators (12, 14, 16).

6. A system according to any of the preceding claims, wherein each actuator (12, 14, 16) has a dry-running gear arrangement (30, 38, 40) associated therewith forming part of the drive transmission arrangement (26).

7. A system according to Claim 5, wherein the dry-running gear arrangements (30, 38, 40) each comprise a pinion gear (44) and a face gear (50) in meshing engagement with one another.

8. A system according to any of the preceding claims, wherein the motor (10) is a dry-running motor with sealed-for-life bearings.

9. A system according to any of the preceding claims wherein the motor output is connected directly to the gear arrangement (30) of a first one of the actuators (12), the gear arrangement (30) of the first one of the actuators (12) being further operable to drive an output whereby rotary drive can be transmitted to at least a second one of actuators (14).

10. A system according to Claim 9, wherein the second actuator (14) has a position sensor (72) associated therewith for monitoring the position of the actuators.

11. A system according to Claim 10, wherein the position sensor (72) is an LVDT driven by a plastics material gearing arrangement (70).

12. A system according to Claim 10, wherein the position sensor is an RVDT sensor driven by a reduction gearbox.
